# EUROPEAN PATENT SPECIFICATION

(11) **EP 3 176 048 B1**
(45) Date of publication and mention of the grant of the patent: **17.11.2021**
(21) Application number: 15827207.0
(22) Date of filing: 16.07.2015
(51) Int. Cl.: B61F 5/40, B61F 5/52, B61H 1/00

(54) **BOGIE FOR RAILWAY VEHICLE AND RAILWAY VEHICLE PROVIDED WITH THE BOGIE**
DREHGESTELL FÜR WALZGUT UND WALZGUT DAMIT
BOGIE POUR MATÉRIEL ROULANT ET MATÉRIEL ROULANT DOTÉ DE CELUI-CI

(30) Priority: 31.07.2014 JP 2014156835
(43) Date of publication of application: 07.06.2017
(73) Proprietor: Nippon Steel Corporation, Tokyo 100-8071 (JP)
(72) Inventor: KIKKO, Satoshi, Tokyo 100-8071 (JP); SHIMOKAWA, Yoshiyuki, Tokyo 100-8071 (JP); NAKAI, Takuji, Tokyo 100-8071 (JP); MIZUNO, Masaaki, Tokyo 100-8071 (JP)
(74) Representative: Zimmermann & Partner Patentanwälte mbB
(86) International application number: PCT/JP2015/003603
(87) International publication number: WO 2016/017103

(56) References cited:
- EP-A1- 0 803 426
- WO-A1-87/06550
- DE-A1-102007 025 163
- GB-A- 1 141 550
- JP-A- S56 135 367
- JP-A- 2010 058 650
- JP-A- 2011 213 244
- US-A- 1 522 935
- US-A- 1 628 298
- US-A- 1 744 986
- US-A- 3 782 294
- None

## Description

### TECHNICAL FIELD

The present invention relates to a bogie for a railway vehicle, and more particularly to a bogie that is capable of performing self-steering of a front wheel axle and a rear wheel axle, and a railway vehicle comprising the bogie and a body.

### BACKGROUND ART

A railway vehicle comprises a body and a bogie, and runs on rails. When a railway vehicle goes round a curve, force of the wheels to push the rails laterally, i.e., what is called a lateral wheel force is generated. Since a great lateral wheel force heightens the risk of derailment, it is desired to reduce the lateral wheel force. With regard to force of the wheels to press the rails vertically, i.e., what is called a vertical wheel force, in a twist of a railway track, especially in a transition curve section at an exit of a curve, the vertical wheel force on the outer rail reduces. Since too large a reduction in the vertical wheel force heightens the risk of derailment, it is desired to keep balance between the right wheels and the left wheels following the twist of the railway track.

As a technique for reducing the lateral wheel force in a curve, for example, Japanese Patent Application Publication No. 61-105268 (Patent Literature 1) discloses a bogie that performs self-steering of the front wheel axle and the rear wheel axle in accordance with the curvatures of the rails in a curve. In the following description, such a bogie that performs self-steering may be referred to as a "steering bogie". In such a conventional steering bogie, axle boxes fitted on the front wheel axle and the rear wheel axle, in the right side and in the left side of each axle, are cross coupled by a cross-anchor link.

In a conventional steering bogie, since the wheel axles incline relative to the bogie frame along with steering of the wheel axles, a relative displacement in the front-rear direction occurs between each of the wheel axels and the bogie frame. In a steering bogie which comprises a wheel tread brake device for each wheel, therefore, it is necessary to take any measure to keep a constant distance in the front-rear direction between each wheel and the corresponding wheel tread brake device at all times. If the wheel tread brake device itself is modified as a measure to keep the distance constant, the structure of the brake device will be complicated, and the manufacturing cost will increase. For this reason, it is preferred to use general-purpose wheel tread brake devices. For the same reason, it is preferred to use general-purpose traction motors and general-purpose gear systems (including couplings) for driving the wheel axles.

As the measure in a case where a steering bogie comprises general-purpose wheel tread brake devices, for example, Patent Literature 1 and Japanese Patent Application Publication No. 8-11717 (Patent Literature 2) disclose that a link system which operates following steering of the wheel axles is further provided specifically for the wheel tread brake devices. This steering bogie, however, requires such a special link system, in addition to the above-described cross-anchor link that enables the bogie to perform steering.

Meanwhile, as a technique for suppressing variations in the vertical wheel force, for example, Japanese Patent Application Publication No. 56-135567 (Patent Literature 3) and Japanese Patent No. 5524634 (Patent Literature 4) disclose a bogie comprising separate right and left frames which are coupled in such a manner that right and left side beams are capable of moving only in the vertical direction or rotating relative to each other. This bogie does not perform steering. Accordingly, the bogie disclosed in Patent Literatures 3 and 4 cannot reduce the lateral wheel force in a curve.

Patent Literature 5 discloses a rail vehicle having a car body (102) and a first chassis (103) which has at least one first wheel unit (105) with two wheels coupled for rotation speed, wherein the car body (102) has a longitudinal axis (102.1), a transverse axis (102.2), and a vertical axis (102.3), and the car body (102) is supported by a spring stage (104) directly on the first wheel unit (105), wherein the first wheel unit (105) is connected to the car body (102) via a shift unit (108). The shift unit (108) is designed in such a manner that if a wheel of the first wheel unit (105) is deflected in the direction of the longitudinal axis (102.1) of the car body (102), the shift unit (108) causes the first wheel unit (105) to undergo a shift movement about a shift axis running in the direction of the vertical axis (102.3).

### PRIOR ART DOCUMENTS

### PATENT LITERATURES

Patent Literature 1: Japanese Patent Application Publication No. 61-105268
Patent Literature 2: Japanese Patent Application Publication No. 8-11717 Patent Literature 3: Japanese Patent Application Publication No. 56-135567
Patent Literature 4: Japanese Patent No. 5524634
Patent Literature 5: DE 10 2007 025 163 A1

### SUMMARY OF INVENTION

### PROBLEMS TO BE SOLVED BY INVENTION

The present invention has been made in light of the problems above, and an objective of the present invention is to provide a bogie and a railway vehicle that are capable of performing self-steering and have the following characteristics:
- capable of using general-purpose wheel tread brake devices and capable of using general-purpose traction motors and general-purpose gear systems (including couplings); and
- capable of reducing the lateral wheel force in a curve and suppressing variations in the vertical wheel force.

### SOLUTIONS TO THE PROBLEMS

The addressed problems are solved by a bogie having the features of claim 1.

In the bogie, it is preferred that the elastic component connecting the first frame and the second frame is a rubber and especially a laminated rubber.

The bogie may be configured such that:
the first cross beam includes a first protrusion protruding to a central portion of the bogie frame;
the second cross beam includes a second protrusion protruding to overlap the first protrusion; and
the first frame and the second frame are connected via the elastic component at one point that is an overlapping point between the first protrusion of the first frame and the second protrusion of the second frame.

Alternatively, the bogie may be configured such that:
the first cross beam includes a first protrusion protruding to overlap an upper surface of the side beam of the second frame;
the second cross beam includes a second protrusion protruding to overlap an upper surface of the side beam of the first frame; and
the first frame and the second frame are connected via the elastic component at two points that are an overlapping point between the first protrusion of the first frame and the side beam of the second frame and an overlapping point between the second protrusion of the second frame and the side beam of the first frame.

In the bogie, the first protrusion and the second protrusion, which are located in a left side and in a right side respectively, may be positioned in different places or may be positioned in a same place in the front-rear direction.

In the latter case, the first protrusion is positioned preferably near the first extending portion, and the second protrusion is positioned preferably near the second extending portion.

The bogie may be configured such that:
the first cross beam includes a first protrusion protruding to overlap an upper surface of the second cross beam;
the second cross beam includes a second protrusion protruding to overlap an upper surface of the first cross beam; and
the first frame and the second frame are connected via the elastic component at two points that are an overlapping point between the first protrusion of the first frame and the second cross beam of the second frame and an overlapping point between the second protrusion of the second frame and the first cross beam of the first frame.

(II) A railway vehicle according to an embodiment of the present invention comprises the above-described bogie and a body. The railway vehicle may be a bolster-less type or may be a bolster type.

### EFFECTS OF INVENTION

The bogie and the railway vehicle according to the present invention are capable of performing self-steering and have the following noticeable advantages:
- capable of using general-purpose wheel tread brake devices and capable of using general-purpose traction motors and general-purpose gear systems (including couplings); and
- capable of reducing the lateral wheel force in a curve and suppressing variations in the vertical wheel force.

### BRIEF DESCRIPTION OF DRAWINGS

Fig. 1 is a schematic top view of an example of a bogie according to a first embodiment of the present invention.
Fig. 2 is a top view of a specific example of a bogie frame used for the bogie illustrated in Fig. 1.
Fig. 3A is a right side view of the bogie illustrated in Fig. 1.
Fig. 3B is a left side view of the bogie illustrated in Fig. 1.
Fig. 4 is a sectional view of the bogie illustrated in Fig. 2 along the line A-A.
Fig. 5 is a schematic top view of an example of a railway vehicle provided with the bogie illustrated in Fig. 1.
Fig. 6 is a front view of the railway vehicle illustrated in Fig. 5.
Fig. 7A is a schematic top view of the railway vehicle illustrated in Fig. 5 while the railway vehicle is turning to the left.
Fig. 7B is a schematic top view of the railway vehicle illustrated in Fig. 5 while the railway vehicle is turning to the right.
Fig. 8 is a schematic top view of an example of a bogie according to a second embodiment of the present invention.
Fig. 9 is a top view of a specific example of a bogie frame used for the bogie illustrated in Fig. 8.
Fig. 10A is a right side view of the bogie illustrated in Fig. 8.
Fig. 10B is a left side view of the bogie illustrated in Fig. 8.
Fig. 11 is a schematic top view of an example of a bogie according to a third embodiment of the present invention.
Fig. 12 is a top view of a specific example of a bogie frame used for the bogie illustrated in Fig. 11.
Fig. 13 is a schematic top view of an example of a bogie according to a fourth embodiment of the present invention.
Fig. 14 is a top view of a specific example of a bogie frame used for the bogie illustrated in Fig. 13.
Fig. 15A is a sectional view of the bogie illustrated in Fig. 14 along the line B-B.
Fig. 15B is a sectional view of the bogie illustrated in Fig. 14 along the line C-C.
Fig. 16 is a schematic front view of an example of a railway vehicle according to a fifth embodiment of the present invention.
Fig. 17 is a schematic front view of an example of a railway vehicle according to a sixth embodiment of the present invention.
Fig. 18 is a schematic front view of an example of a railway vehicle according to a seventh embodiment of the present invention.
Fig. 19 is a graph indicating the results of analysis of an example.

### DETAILED DESCRIPTION OF EMBODIMENTS

Bogies and railway vehicles according to some embodiments of the present invention will hereinafter be described.

### [First Embodiment]

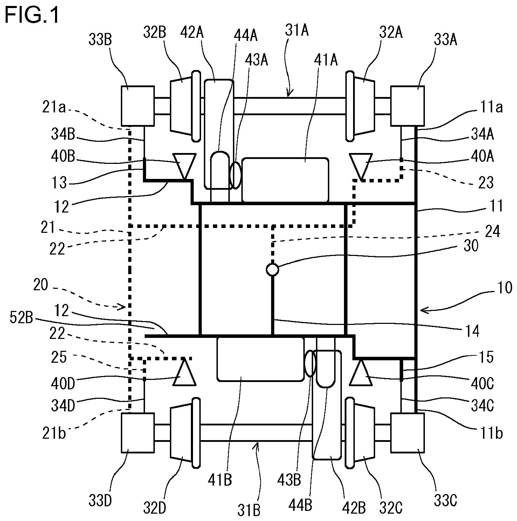

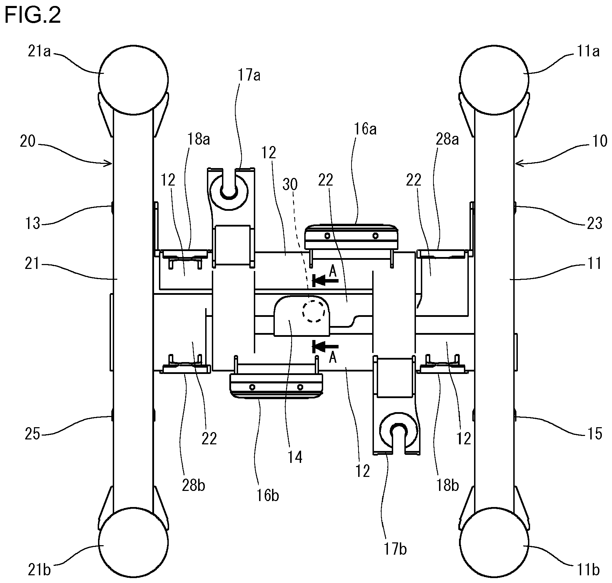

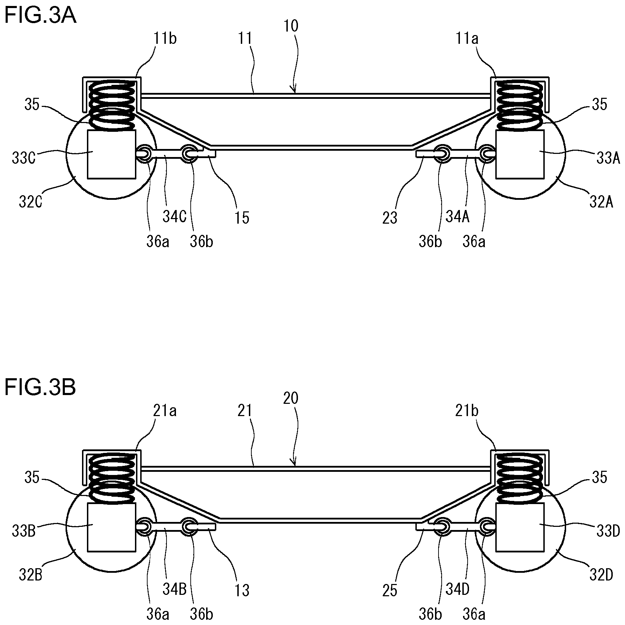

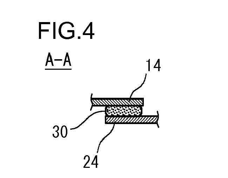

Fig. 1 is a schematic top view of an example of a bogie according to a first embodiment of the present invention. Fig. 2 is a top view of a specific example of a bogie frame used for the bogie illustrated in Fig. 1. Fig. 3A is a right side view of the bogie illustrated in Fig. 1, and Fig. 3B is a left side view of the bogie. Fig. 4 is a sectional view of the bogie illustrated in Fig. 2 along the line A-A.

As illustrated in Figs. 1 and 2, the bogie according to the first embodiment comprises, as the frame of the bogie, a first frame 10 and a second frame 20 that are separate from and independent of each other. The first frame 10 and the second frame 20 are assembled into a bogie frame. In Fig. 1, in order to illustrate the structures of the first frame 10 and the second frame 20 in an easily understandable form, the components of the first frame 10 are indicated by bold solid lines, and the components of the second frame 20 are indicated by bold dotted lines.

The first frame 10 includes a right side beam 11 and a first cross beam 12. The right side beam 11 and the fist cross beam 12 are welded firmly and are integrated together. The second frame 20 includes a left side beam 21 and a second cross beam 22. The left side beam 21 and the second cross beam 22 are welded firmly and integrated together.

The first cross beam 12 of the first frame 10 includes a first extending portion 13 extending toward the front end portion 21a of the side beam 21 of the second frame 20 (see Figs. 1, 2 and 3B). The first extending portion 13 is led to below the side beam 21 of the second frame 20 and extends to the rear of the front end portion 21a of the side beam 21. Thus, the first extending portion 13 extending from the first cross beam 12, which is integrated with the right side beam 11, reaches to the left side beam 21 on the opposite side from the right side beam 11. Meanwhile, the second cross beam 22 of the second frame 20 includes a second extending portion 23 extending toward the front end portion 11a of the side beam 11 of the first frame 10 (see Figs. 1, 2 and 3A). The second extending portion 23 is led to below the side beam 11 of the first frame 10 and extends to the rear of the front end portion 11a of the side beam 11. Thus, the second extending portion 23 extending from the second cross beam 22, which is integrated with the left side beam 21, reaches to the right side beam 11 on the opposite side of the left side beam 21.

The first frame 10 and the second frame 20 are coupled together via an elastic component 30. Specifically, as seen in Figs. 1, 2 and 4, the first cross beam 12 includes a first protrusion 14 protruding to the central portion of the bogie. Meanwhile, the second cross beam 22 includes a second protrusion 24 protruding to overlap the first protrusion 14. The first protrusion 14 and the second protrusion 24 in the overlap area are horizontal. In the overlap area, either of the first protrusion 14 and the second protrusion 24 may be located above the other. Fig. 4 shows a case in which the first protrusion 14 is above the second protrusion 24.

In the overlap area, the elastic component 30 is located between the first protrusion 14 and the second protrusion 24, and the protrusions 14 and 24 are connected via the elastic component 30. Thus, the first frame 10 and the second frame 20 are coupled with each other via the elastic member 30 at one point, that is, at one overlapping point between the first protrusion 14 of the first frame 10 and the second protrusion 24 of the second frame 20. The elastic component 30 tolerates elastic deformation in every direction, that is, in any of the longitudinal (front-rear), the lateral (right-left) and the vertical (up-down) directions. More specifically, the elastic component 30 is relatively hard in the vertical direction and sufficiently soft in the longitudinal direction to allow for steering performance. The elastic component 30 is also sufficiently soft to respond to rotations in the rolling direction and the pitching direction to follow twists and turns of railway tracks. As the elastic component 30, a rubber, such as a natural rubber, a synthetic rubber or the like, may be alone used, or alternatively a laminated rubber made by stacking thin rubber sheets and steel sheets alternately may be used. Practically, using a laminated rubber is preferred.

The bogie frame, which comprises the first frame 10 and the second frame 20, further comprises a wheel axle 31A and a wheel axle 31B in the front and in the rear, respectively. Wheels 32A and 32B are fitted on the axle 31A, in the right side and in the left side, respectively, and wheels 32C and 32D are fitted on the axle 31B, in the right side and in the left side, respectively. Axle boxes 33A and 33B are fitted on the axle 31A, in the right end portion and in the left end portion, respectively, and axle boxes 33C and 33D are fitted on the axle 31B, in the right end portion and in the left end portion, respectively. The axle boxes 33A, 33B, 33C and 33D are supported elastically relative to the bogie frame (the first frame 10 and the second frame 20) via primary suspensions.

All of the primary suspensions are general-purpose items. As seen in Figs. 1, 3A and 3B, the primary suspensions include links 34A, 34B, 34C and 34D extending in the front-rear direction from the axle boxes 33A, 33B, 33C and 33D, respectively. The primary suspensions illustrated in Figs. 3A and 3B are what are called a mono-link type. The mono-link type means a type connecting an axle box and a bogie frame via one link having rubber bushes inserted therein, at both ends.

The right front primary suspension, as seen especially in Fig. 3A, permits the right front axle box 33A to be supported by the front end portion 11a of the side beam 11 of the first frame 10. Between the axle box 33A and the front end portion 11a of the side beam 11, a coil spring 35 is provided. In addition to or in place of the coil spring 35, a laminated rubber may be provided. The link 34A of the primary suspension has rubber bushes 36a and 36b at the front end and at the rear end, respectively. The front end portion of the link 34A is connected to the axle box 33A via the rubber bush 36a, and the rear end portion of the link 34A is connected to the second extending portion 23 of the second frame 20 via the rubber bush 36b.

The left front primary suspension, as seen especially in Fig. 3B, permits the left front axle box 33B to be supported by the front end portion 21a of the side beam 21 of the second frame 20. The mechanism for supporting the axle box 33B by the front end portion 21a of the side beam 21 is similar to the above-described mechanism of the right front primary suspension. The link 34B of the left front primary suspension has rubber bushes 36a and 36b at the front end and at the rear end, respectively. The front end portion of the link 34B is connected to the axle box 33B via the rubber bush 36a, and the rear end portion of the link 34B is connected to the first extending portion 13 of the first frame 10 via the rubber bush 36b.

The right rear primary suspension, as seen especially in Fig. 3A, permits the right rear axle box 33C to be supported by the rear end portion 11b of the side beam 11 of the first frame 10. The mechanism for supporting the axle box 33C by the rear end portion 11b of the side beam 11 is similar to the above-described mechanism of the right front primary suspension. On the lower surface of the side beam 11 of the first frame 10, a first projection 15 is provided. The first projection 15 protrudes from a point in the front side of the rear end portion 11b of the side beam 11. The link 34C of the right rear primary suspension has rubber bushes 36a and 36b at the rear end and at the front end, respectively. The rear end portion of the link 34C is connected to the axle box 33C via the rubber bush 36a, and the front end portion of the link 34C is connected to the first projection 15 of the first frame 10 via the rubber bush 36b.

The left rear primary suspension, as seen especially in Fig. 3B, permits the left rear axle box 33D to be supported by the rear end portion 21b of the side beam 21 of the second frame 20. The mechanism for supporting the axle box 33D by the rear end portion 21b of the side beam 21 is similar to the above-described mechanism of the right front primary suspension. On the lower surface of the side beam 21 of the second frame 20, a second projection 25 is provided. The second projection 25 protrudes from a point in the front side of the rear end portion 21b of the side beam 21. The link 34D of the left rear primary suspension has rubber bushes 36a and 36b at the rear end and at the front end, respectively. The rear end portion of the link 34D is connected to the axle box 34D via the rubber bush 36a, and the front end portion of the link 34D is connected to the second projection 25 of the second frame 20 via the rubber bush 36b.

As illustrated in Fig. 1, on the bogie frame (the first frame 10 and the second frame 20), wheel tread brake devices 40A, 40B, 40C and 40D are provided for the right and the left wheels 32A and 32B fitted on the axle 31A and the right and the left wheels 32C and 32D fitted on the axle 31B, respectively. The wheel tread brake devices 40A, 40B, 40C and 40D include brake shoes facing the treads of the wheels 32A, 32B, 32C and 32D, respectively.

The right front wheel tread brake device 40A is held in a position immediately behind the right front wheel 32A by the second cross beam 22 of the second frame 20. The left front wheel tread brake device 40B is held in a position immediately behind the left front wheel 32B by the first cross beam 12 of the first frame 10. The right rear wheel tread brake device 40C is held in a position immediately in front of the right rear wheel 32C by the first cross beam 12 of the first frame 10. The left rear wheel tread brake device 40D is held in a position immediately in front of the left rear wheel 32D by the second cross beam 22 of the second frame 20.

Specifically, as illustrated in Fig. 2, the right front wheel tread brake device 40A and the left rear wheel tread brake device 40D are fixed on mounting brackets 28a and 28b for a brake device, respectively, provided to the second cross beam 22 of the second frame 20. The left front wheel tread brake devices 40B and the right rear wheel tread brake device 40C are fixed on mounting brackets 18a and 18b for a brake device, respectively, provided to the first cross beam 12 of the first frame 10.

As seen in Fig. 1, in order to drive the wheel axles 31A and 31B, traction motors 41A and 41B, gear systems 42A and 42B, and couplings 43A and 43B are provided on the bogie frame (the first frame 10 and the second frame 20). All of the traction motors 41A and 41B, the gear systems 42A and 42B, and the couplings 43A and 43B are general-purpose items. The gear system 42A includes a rack wheel fitted on the axle 31A and a pinion engaging with this rack wheel, and the gear system 42B includes a rack wheel fitted on the axle 31B and a pinion engaging with this rack wheel. The couplings 43A and 43B are gear couplings or flexible plate couplings. The coupling 43A connects the main shaft of the traction motor 41A and the pinion shaft of the gear system 42A so as to transmit the rotation torque of the main shaft of the traction motor 41A to the pinion shaft of the gear system 42A. The coupling 43B connects the main shaft of the traction motor 41B and the pinion shaft of the gear system 42B so as to transmit the rotation torque of the main shaft of the traction motor 41B to the pinion shaft of the gear system 42B. Also, the coupling 43A absorbs a relative displacement between the main shaft of the traction motor 41A and the pinion shaft of the gear system 42A, and the coupling 43B absorbs a relative displacement between the main shaft of the traction motor 41B and the pinion shaft of the gear system 42B.

The front gear system 42A is fitted on the front wheel axle 31A, adjacent to the left front wheel 32B. On the cross beam 12 of the first frame 10, a hanger 44A is provided adjacent to the left front wheel tread brake device 40B. The front gear system 42A is suspended by the hanger 44A to be capable of swinging. The rear gear system 42B is fitted on the rear wheel axle 31B, adjacent to the right rear wheel 32C. On the cross beam 12 of the first frame 10, a hanger 44B is provided adjacent to the right rear wheel tread brake device 40C. The rear gear system 42B is suspended by the hanger 44B to be capable of swinging.

Specifically, as illustrated in Fig. 2, the first frame 10 includes a mounting bracket 17a for a hanger protruding forward from the first cross beam 12, and the front gear system 42A is fitted to the mounting bracket 17a for a hanger via the hanger 44A. The first frame 10 also includes a mounting bracket 17b for a hanger protruding backward from the first cross beam 12, and the rear gear system 42B is fitted to the mounting bracket 17b for a hanger via the hanger 44B.

On the first cross beam 12 of the first frame 10, the traction motor 41A is held in a position adjacent to the front hanger 44A, and the traction motor 41B is held in a position adjacent to the rear hanger 44B. Specifically, as seen in Fig. 2, the front traction motor 41A is fitted on a mounting bracket 16a for a traction motor protruding forward from the first cross beam 12 of the first frame 10. The rear traction motor 41B is fitted on a mounting bracket 16b for a traction motor protruding backward from the first cross beam 12 of the first frame 10.

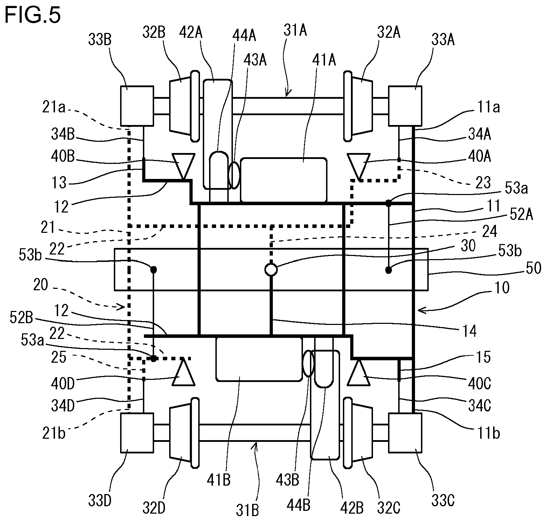

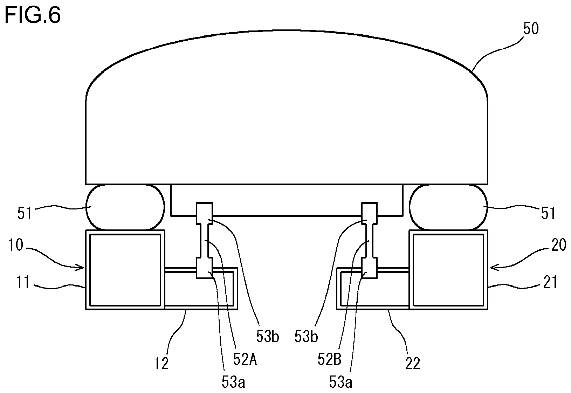

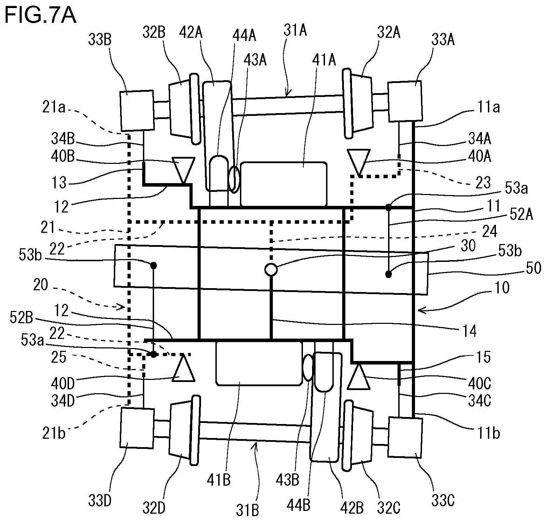

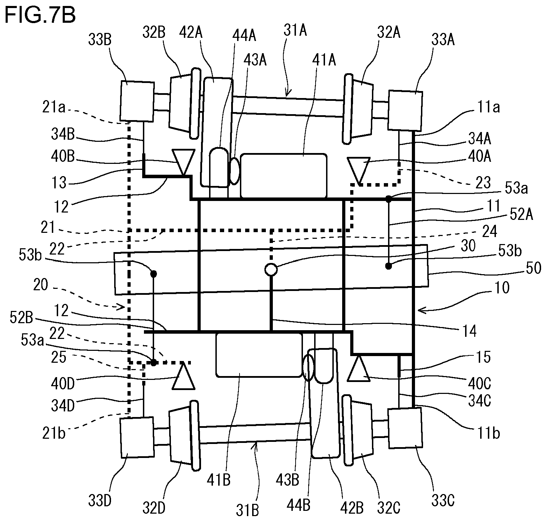

Fig. 5 is a schematic top view of an example of a railway vehicle provided with the bogie illustrated in Fig. 1. Fig. 6 is a front view of the railway vehicle illustrated in Fig. 5. Fig. 7A and 7B are schematic top views of the railway vehicle illustrated in Fig. 5 while the railway vehicle goes round a curve on the rails. Fig. 7A shows a case in which the railway vehicle is turning to the left, and Fig. 7B shows a case in which the railway vehicle is turning to the right.

The railway vehicle illustrated in Figs. 5 to 7B is provided with a bolster-less bogie, and accordingly, no bolster is provided between the body and the bogie. The railway vehicle comprises two bogies of the above-described type provided in the front and in the rear, respectively, of a body 50. In Figs. 5 to 7B, for the sake of simplicity, the bogie provided in the rear is not illustrated. As in Fig. 1, the components of the first frame 10 are indicated by bold solid lines, and the components of the second frame 20 are indicated by bold dotted lines. In Fig. 6, for the sake of simplicity, the wheel axles are not illustrated.

As illustrated in Figs. 5 and 6, air suspensions 51 are provided on the side beams 11 and 21 of the first and the second frames 10 and 20 that form a bogie frame. The body 50 is joined to the bogie frame (the side beam 11 of the first frame 10 and the side beam 21 of the second frame 20) via the air suspensions 51.

As illustrated in Figs. 5 and 6, links 52A and 52B are provided between the body 50 and the bogie, in the right side and in the left side, respectively. Each of the links 52A and 52B extends in the front-rear direction and has rubber bushes 53a and 53b at the front end and at the rear end, respectively. The front end portion of the right link 52A is connected to the first cross beam 12 of the first frame 10 via the rubber bush 53a, and the rear end portion thereof is connected to the body 50 via the rubber bush 53b. The rear end portion of the left link 52B is connected to the second cross beam 22 of the second frame 20 via the rubber bush 53a, and the front end portion thereof is connected to the body 50 via the rubber bush 53b.

The air suspensions 51 absorb the weight of the body 50. The rubber bushes 53a and 53b of the right and the left links 52A and 52B tolerate displacements in the vertical (up-down) and the lateral (right-left) directions.

While the railway vehicle having the above-described structure goes round a curve on the rails, the components of the railway vehicle behave as follows. In a curve, a relative yawing displacement between the body 50 and the bogie occurs. For example, in a curve to the left, as illustrated in Fig. 7A, the body 50 yaws to the right relative to the bogie, that is, relative to the traveling direction of the railway vehicle. On the other hand, in a curve to the right, as illustrated in Fig. 7B, the body 50 yaws to the left relative to the bogie.

First, referring to Fig. 7A, a case in which the railway vehicle turns to the left is described. As described above, the body 50 is connected to the first frame 10 (the first cross beam 12) via the right link 52A, and is connected to the second frame 20 (the second cross beam 22) via the left link 52B. Accordingly, the yawing of the body 50 to the right generates a force to push the first frame 10 backward via the right link 52A and a force to push the second frame 20 forward via the left link 52B. Thus, the directions of forces acting on the first frame 10 and the second frame 20 in this moment are opposite with respect to the front-rear direction.

As described above, the first frame 10 and the second frame 20 are connected together via the elastic component 30. By the forces acting on the first frame 10 and the second frame 20, the elastic component 30 is elastically deformed. Then, the first frame 10 is displaced backward, and the second frame 20 is displaced forward. Thus, a relative displacement in the front-rear direction occurs between the first frame 10 and the second frame 20.

In this regard, the axle boxes 33A and 33C, which are supported elastically by the front end portion 11a and the back end portion 11b, respectively, of the side beam 11 of the first frame 10, behave as follows. The right front axle box 33A is supported by the first frame 10 and is also connected to the second extending portion 23 of the second frame 20, not the first frame 10, via the link 34A. Accordingly, the right front axle box 33A receives a force in the forward direction, which is opposite to the direction of displacement of the first frame 10, and is displaced forward. On the other hand, the right rear axle box 33C is supported by the first frame 10 and is also connected to the first projection 15 of the same first frame 10 via the link 34C. Accordingly, the right rear axle box 33C is displaced backward together with the first frame 10.

Meanwhile, the axle boxes 33B and 33D, which are supported elastically by the front end portion 21a and the back end portion 21b, respectively, of the side beam 21 of the second frame 20, behave as follows. The left front axle box 33B is supported by the second frame 20 and is also connected to the first extending portion 13 of the first frame 10, not the second frame 20, via the link 34B. Accordingly, the left front axle box 33B receives a force in the backward direction, which is opposite to the direction of displacement of the second frame 20, and is displaced backward. On the other hand, the left rear axle box 33D is supported by the second frame 20 and is also connected to the second projection 25 of the same second frame 20 via the link 34D. Accordingly, the left rear axle box 33D is displaced forward together with the second frame 20.

Along with the forward displacement of the right front axle box 33A and the backward displacement of the left front axle box 33B, the right side of the front wheel axle 31A is displaced forward, and the left side thereof is displaced backward. In this way, the front wheel axle 31A is self-steered such that the axis thereof turns to the center of curvature of the left-hand curve of the railway track. Meanwhile, along with the backward displacement of the right rear axle box 33C and the forward displacement of the left rear axle box 33D, the right side of the rear wheel axle 31B is displaced backward, and the left side thereof is displaced forward. In this way, the rear wheel axle 31B is self-steered such that the axis thereof turns to the center of curvature of the left-hand curve of the railway track. Thus, a relative yawing displacement between the body 50 and the bogie causes a relative displacement in the front-rear direction between the first frame 10 and the second frame 20, and along with the relative displacement between the frames 10 and 20, the front and rear wheel axles 31A and 31B are self-steered.

In this moment, the front wheel tread brake devices 40A and 40B behave as follows. Since the right front wheel tread brake device 40A is supported by the second cross beam 22 of the second frame 20, the right front wheel tread brake device 40A is displaced forward together with the second frame 20. Since the left front wheel tread brake device 40B is supported by the first cross beam 12 of the first frame 10, the left front wheel tread brake device 40B is displaced backward together with the first frame 10. Meanwhile, along with the above-described displacements of the right side and the left side of the front wheel axle 31A, the right front wheel 32A is displaced forward, and the left front wheel 32B is displaced backward. In this regard, the amount of forward displacement of the right front wheel tread brake device 40A and the amount of forward displacement of the right front wheel 32A are substantially equal to each other. The amount of backward displacement of the left front wheel tread brake device 40B and the amount of backward displacement of the left front wheel 32B are substantially equal to each other. Therefore, the distances in the front-rear direction between the wheel 32A and the wheel tread brake device 40A and between the wheel 32B and the wheel tread brake device 40B are constant regardless of steering.

Also, the rear wheel tread brake devices 40C and 40D behave as follows. Since the right rear wheel tread brake device 40C is supported by the first cross beam 12 of the second frame 10, the right rear wheel tread brake device 40C is displaced backward together with the first frame 10. Since the left rear wheel tread brake device 40D is supported by the second cross beam 22 of the second frame 20, the left rear wheel tread brake device 40D is displaced forward together with the second frame 20. Meanwhile, along with the above-described displacements of the right side and the left side of the rear wheel axle 31B, the right rear wheel 32C is displaced backward, and the left rear wheel 32D is displaced forward. In this regard, the amount of backward displacement of the right rear wheel tread brake device 40C and the amount of backward displacement of the right rear wheel 32C are substantially equal to each other. The amount of forward displacement of the left rear wheel tread brake device 40D and the amount of forward displacement of the left rear wheel 32D are substantially equal to each other. Therefore, the distances in the front-rear direction between the wheel 32C and the wheel tread brake device 40C and between the wheel 32D and the wheel tread brake device 40D are constant regardless of steering.

Accordingly, even if general-purpose items are used as the wheel tread brake devices 40A, 40B, 40C and 40D, the distance in the front-rear direction between each of the wheels 32A, 32B, 32C and 32D and the corresponding one of the wheel tread brake devices 40A, 40B, 40C and 40D is constant regardless of steering, and the wheel tread brake devices 40A, 40B, 40C and 40D can achieve satisfactory braking performance at all times.

Also, since the front and the rear traction motors 41A and 41B are supported by the first cross beam 12 of the first frame 10, the traction motors 41A and 41B are displaced backward together with the first frame 10. Meanwhile, the front gear system 42A is fitted on the front wheel axle 31A, adjacent to the left front wheel 32B. The rear gear system 42B is fitted on the rear wheel axle 31B, adjacent to the right rear wheel 32C. Therefore, along with above-described displacements of the front and the rear wheel axles 31A and 31B, the front and the rear gear systems 42A and 42B are displaced backward. In this regard, the amount of backward displacement of the front traction motor 41A is a little different from the amount of backward displacement of the front gear system 42A, but the difference is absorbed by the front coupling (gear coupling or flexible plate coupling) 43A. The amount of backward displacement of the rear traction motor 41B is a little different from the amount of backward displacement of the rear gear system 42B, but the difference is absorbed by the rear coupling (gear coupling or flexible plate coupling) 43B. Accordingly, even if general-purpose items are used as the traction motors 41A and 41B, the gear systems 42A and 42B, and the couplings 43A and 43B, the distance in the front-rear direction between each of the gear systems 42A and 42B and the corresponding one of the couplings 43A and 43B is constant regardless of steering, and the wheel axles 31A and 31B can be driven smoothly at all times.

Next, referring to Fig. 7B, a case in which the railway vehicle turns to the right is described. In a right-hand curve of a railway track, the body 50 yaws to the left relative to the bogie in an opposite manner to the above-described case of a left-hand curve. Then, in an opposite manner to the case of a left-hand curve, the first frame 10 is forced forward via the right link 52A, and the second frame 20 is forced backward via the left link 52B. Accordingly, a relative displacement in the front-rear direction between the first frame 10 and the second frame 20 occurs in an opposite manner to that in the above-described case of a left-hand curve. In this case, therefore, the components in the right side and the components in the left side behave in the same manner as the behaviors of the components in the opposite side in the case of a left-hand curve.

As thus far described, according to the present embodiment, while the railway vehicle goes round a curve on the rails, a relative yawing displacement between the body 50 and the bogie causes a relative displacement in the front-rear direction between the first frame 10 and the second frame 20, and along with the relative displacement between the frames 10 and 20, the front and rear wheel axles 31A and 31B are self-steered. Thereby, the lateral wheel force on the rails can be reduced.

The axle boxes 33A, 33B, 33C and 33D are supported elastically by the first frame 10 and the second frame 20 via the primary suspensions, and the first frame 10 and the second frame 20 are connected via the elastic component 30. Therefore, it is possible to tolerate a relative rolling displacement between the front wheel axle 31A and the rear wheel axle 31B occurring in a twist of the railway track. Thus, variations in the vertical wheel force can be suppressed.

Also, general-purpose wheel tread brake devices can be used, and general-purpose traction motors and general-purpose gear systems (including couplings) can be used.

### [Second Embodiment]

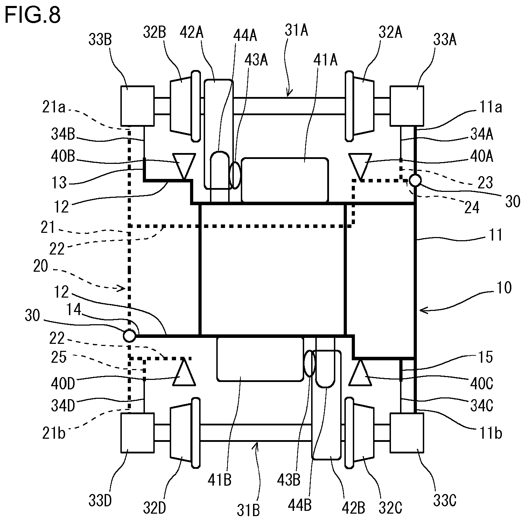

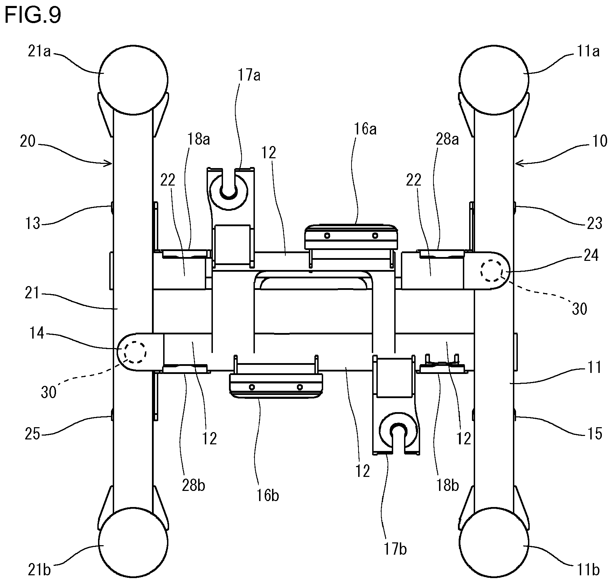

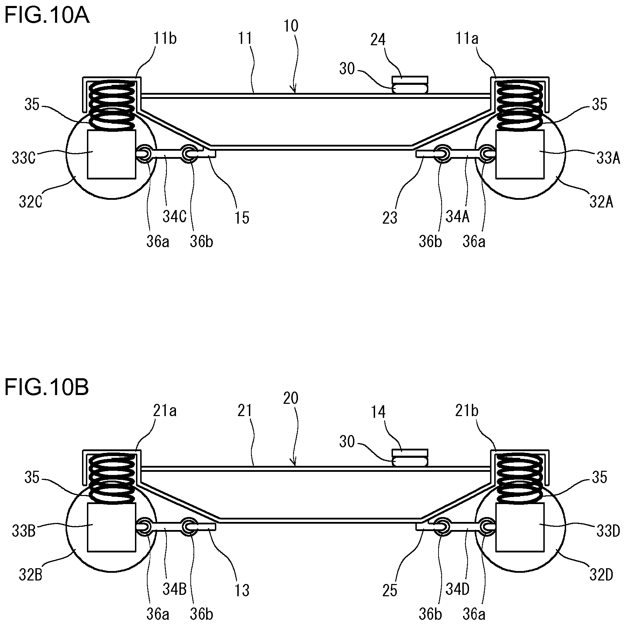

Fig. 8 is a schematic top view of an example of a bogie according to a second embodiment of the present invention. Fig. 9 is a top view of a specific example of a bogie frame used for the bogie illustrated in Fig. 8. Fig. 10A is a right side view of the bogie illustrated in Fig. 8, and Fig. 10B is a left side view of the bogie. The second embodiment is based on the above-described structure of the first embodiment, and the description already given in connection with the first embodiment will not be repeated in the following description of the second embodiment. The same applies to the third to the seventh embodiments below. In Fig. 8, as in Fig. 1, the components of the first frame 10 are indicated by bold solid lines, and the components of the second frame 20 are indicated by bold dotted lines.

According to the second embodiment, as seen in Figs. 8, 9 and 10B, the first protrusion 14 extending from the first cross beam 12 is located above the upper surface of the side beam 21 of the second frame 20. The position of the overlap area between the first protrusion 14 and the side beam 21 is not particularly limited as long as it is above the upper surface of the side beam 21 of the second frame 20. In view of simplicity of design, however, it is preferred that the first protrusion 14 is located near the first extending portion 13 extending from the first cross beam 12.

Also, as seen in Figs. 8, 9 and 10A, the second protrusion 24 extending from the second cross beam 22 is located above the upper surface of the side beam 11 of the first frame 10. The position of the overlap area between the second protrusion 24 and the side beam 11 is not particularly limited as long as it is above the upper surface of the side beam 11 of the first frame 10. In view of simplicity of design, however, it is preferred that the second protrusion 24 is located near the second extending portion 23 extending from the second cross beam 22.

According to the second embodiment, the first protrusion 14 located in the left side and the second protrusion 24 located in the right side are arranged in different positions in the front-rear direction (see Figs. 8 and 9).

An elastic component 30 is provided in the overlap area between the first protrusion 14 of the first frame 10 and the side beam 21 of the second frame 20, and the first protrusion 14 and the side beam 21 are connected via this elastic component 30 (see especially Fig. 10B). Similarly, an elastic component 30 is provided in the overlap area between the second protrusion 24 of the second frame 20 and the side beam 11 of the first frame 10, and the second protrusion 24 and the side beam 11 are connected via this elastic component 30 (see especially Fig. 10A). Thus, the first frame 10 and the second frame 20 are connected via the elastic components 30 at two points, that is, at an overlapping point between the first protrusion 14 of the first frame 10 and the side beam 21 of the second frame 20 and at an overlapping point between the second protrusion 24 of the second frame 20 and the side beam 11 of the first frame 10. As with the elastic component 30 of the above-described first embodiment, the elastic components 30 of the second embodiment tolerate elastic deformation in every direction.

Thus, as with the first embodiment, the components 30 connecting the first frame 10 and the second frame 20 are elastic. The other components of the second embodiment are the same as those of the first embodiment. Accordingly, the second embodiment brings about the same effects as described in connection with the first embodiment.

### [Third Embodiment]

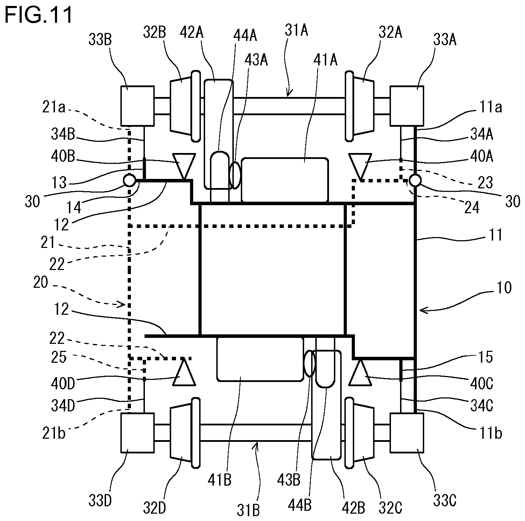

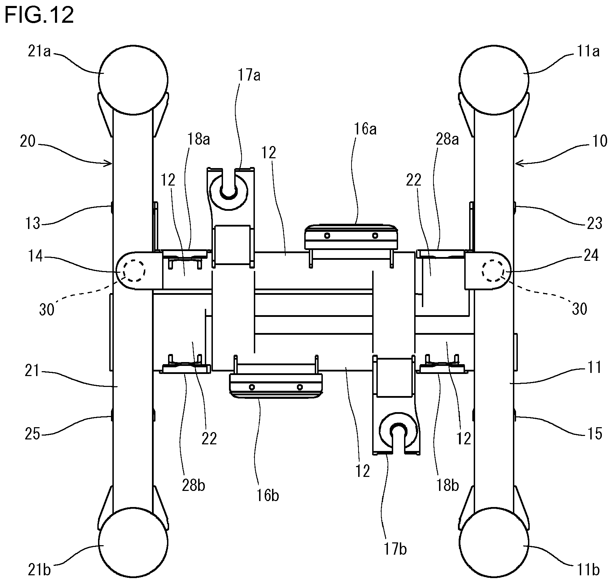

Fig. 11 is a schematic top view of an example of a bogie according to a third embodiment of the present invention. Fig. 12 is a top view of a specific example of a bogie frame used for the bogie illustrated in Fig. 11. The third embodiment is a modification to the second embodiment. In Fig. 11, as in Fig. 1, the components of the first frame 10 are indicated by bold solid lines, and the components of the second frame 20 are indicated by bold dotted lines.

According to the third embodiment, the first protrusion 14 and the second protrusion 24, which are located in the left side and in the right side respectively, are positioned in the same place in the front-rear direction. The positions in the front-rear direction of the first protrusion 14 and the second protrusion 24 are not particularly limited as long as the positions in the front-rear direction are the same. In view of the simplicity of design, however, it is preferred that the second protrusion 24 is located near the second extending portion 23 extending from the same second cross beam 22. It is preferred that the first protrusion 14 is located near the first extending portion 13 extending from the same first cross beam 12.

In the third embodiment, as with the first and the second embodiments, the components 30 connecting the first frame 10 and the second frame 20 are elastic. The other components of the third embodiment are the same as those of the first and the second embodiments. Accordingly, the third embodiment brings about the same effects as described in connection with the first embodiment.

### [Fourth Embodiment]

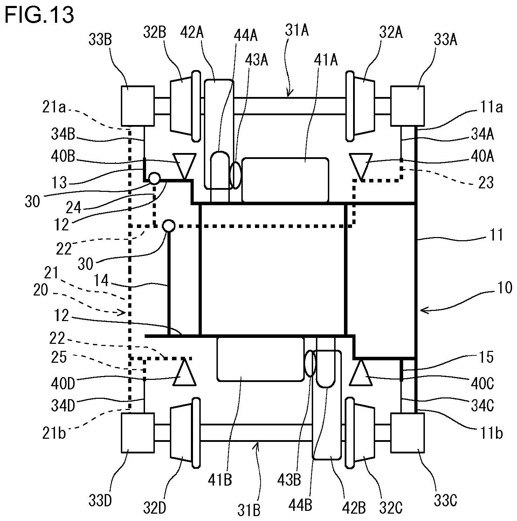

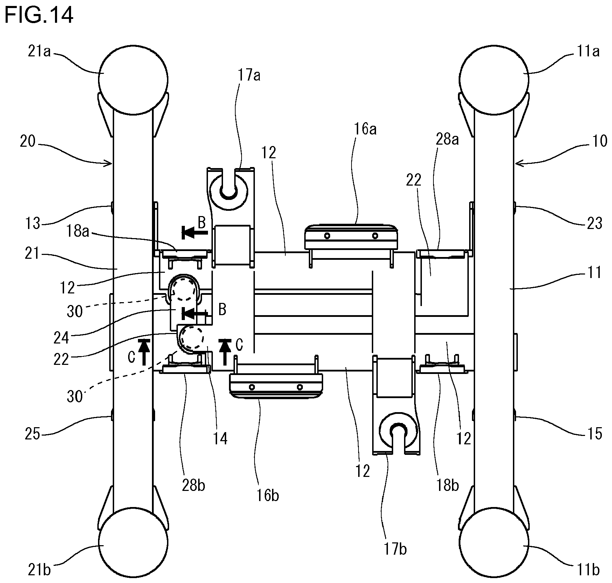

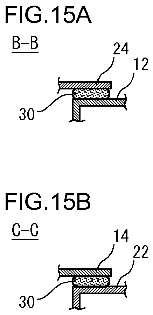

Fig. 13 is a schematic top view of an example of a bogie according to a fourth embodiment of the present invention. Fig. 14 is a top view of a specific example of a bogie frame used for the bogie illustrated in Fig. 13. Fig. 15A is a sectional view of the bogie illustrated in Fig. 14 along the line B-B. Fig. 15B is a sectional view of the bogie illustrated in Fig. 14 along the line C-C. In Fig. 13, as in Fig. 1, the components of the first frame 10 are indicated by bold solid lines, and the components of the second frame 20 are indicated by bold dotted lines.

According to the fourth embodiment, as seen in Figs. 13, 14 and 15B, the first protrusion 14 extending from the first cross beam 12 is located above the upper surface of the second cross beam 22. The position of the overlap area is not particularly limited as long as it is above the upper surface of the second cross beam 22. Also, as seen in Figs. 13, 14 and 15A, the second protrusion 24 extending from the second cross beam 22 is located above the upper surface of the first cross beam 12. The position of the overlap area is not particularly limited as long as it is above the upper surface of the first cross beam 12.

An elastic component 30 is provided in the overlap area between the first protrusion 14 of the first frame 10 and the cross beam 22 of the second frame 20, and the first protrusion 14 and the second cross beam 21 are connected via this elastic component 30 (see especially Fig. 15B). Similarly, an elastic component 30 is provided in the overlap area between the second protrusion 24 of the second frame 20 and the cross beam 12 of the first frame 10, and the second protrusion 24 and the first cross beam 12 are connected via this elastic component 30 (see especially Fig. 15A). Thus, the first frame 10 and the second frame 20 are connected via the elastic components at two points, that is, at an overlapping point between the first protrusion 14 of the first frame 10 and the second cross beam 22 of the second frame 20 and at an overlapping point between the second protrusion 24 of the second frame 20 and the first cross beam 11 of the first frame 10. As with the elastic component 30 of the above-described first embodiment, the elastic components 30 tolerate elastic deformation in every direction.

Thus, as with the first to the third embodiments, the components 30 connecting the first frame 10 and the second frame 20 are elastic. The other components of the fourth embodiment are the same as those of the first to the third embodiments. Accordingly, the fourth embodiment brings about the same effects as described in connection with the first embodiment.

### [Fifth Embodiment]

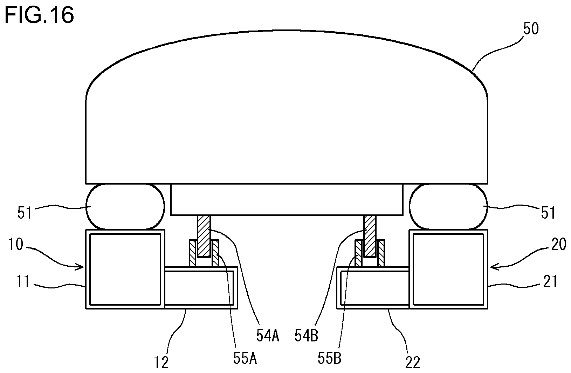

Fig. 16 is a schematic front view of an example of a railway vehicle according to a fifth embodiment of the present invention. The fifth embodiment differs from the first to the fourth embodiments in the mechanism for supporting the body 50 and the bogie. Specifically, in place of the right and the left links 52A and 52B, other components to support the body 50 and the bogie are provided.

As seen in Fig. 16, a right shaft 54A and a left shaft 54B protrude from the lower surface of the body 50. On the upper surface of the first cross beam 12 of the first frame 10, a cylindrical member 55A is provided in a position to correspond to the right shaft 54A. Also, on the upper surface of the second cross beam 22 of the second frame 20, a cylindrical member 55B is provided in a position to correspond to the left shaft 54B. The right and the left shafts 54A and 54B are inserted in the cylindrical members 55A and 55B, respectively. Thereby, the shafts 54A and 54B are inserted in the cylindrical members 55A and 55B, respectively, in such a manner to allow for axial rotation of the shaft 54A within the cylindrical member 55A and axial rotation of the shaft 54B within the cylindrical member 55B. The other components of the fifth embodiment are the same as those of the first to the fourth embodiment.

According to the fifth embodiment, while the railway vehicle goes round a curve on the rails, a relative yawing displacement between the body 50 and the bogie is transmitted to the first frame 10 and the second frame 20 through the engagement between the shaft 54A of the body 50 and the cylindrical member 55A of the frame 10 and the engagement between the shaft 54B of the body 50 and the cylindrical member 55B of the frame 20. Accordingly, as with the first to the fourth embodiments, a relative displacement in the front-rear direction between the first frame 10 and the second frame 20 is caused.

Therefore, the fifth embodiment brings about the same effects as described in connection with the first embodiment.

### [Sixth Embodiment]

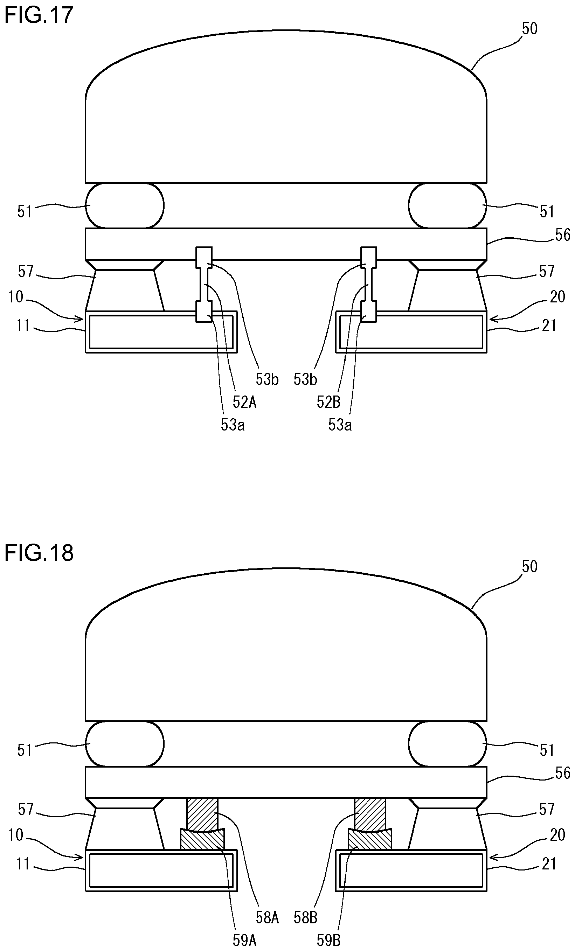

Fig. 17 is a schematic front view of an example of a railway vehicle according to a sixth embodiment of the present invention. According to the sixth embodiment, a bogie with a bolster is used in place of the bogie according to each of the first to the fourth embodiments.

As illustrated in Fig. 17, the railway vehicle comprises a right side bearing 57, a left side bearing 57 and a bolster 56 between the body 50 and the bogie. The right side bearing 57 and the left side bearing 57 are provided on the side beam 11 of the first frame 10 and on the side beam 21 of the second frame 20, respectively. The bolster 56 is slidably supported by the side bearings 57. The air suspensions 51 are provided on the upper surface of the bolster 56. The body 50 is connected to the bolster 56 via the air suspensions 51.

According to the sixth embodiment, the right and the left links 52A and 52B as used in the first to the fourth embodiments are provided between the bolster 56 and the bogie. With regard to the right link 52A extending in the front-rear direction, the front end portion thereof is connected to the first frame 10 (the right side beam or the first cross beam) via the rubber bush 53a, and the rear end portion thereof is connected to the bolster 56 via the rubber bush 53b. With regard to the left link 52B extending in the front-rear direction, the rear end portion thereof is connected to the second frame 20 (the left side beam or the second cross beam) via the rubber bush 53a, and the front end portion thereof is connected to the bolster 56 via the rubber bush 53b.

According to the sixth embodiment, since the body 50 and the bolster 50 are integrated with each other, while the railway vehicle goes round a curve on the rails, a relative yawing displacement occurs between the bolster 56, which is integrated with the body 50, and the bogie. The yawing displacement is transmitted to the first frame 10 and the second frame 20 via the right and the left links 52A and 52B connecting the bolster 56 and the bogie. Accordingly, as with the first to the fourth embodiments, a relative displacement in the front-rear direction between the first frame 10 and the second frame 20 is caused.

Therefore, the sixth embodiment brings about the same effects as described in connection with the first embodiment.

### [Seventh Embodiment]

Fig. 18 is a schematic front view of an example of a railway vehicle according to a seventh embodiment. The seventh embodiment differs from the sixth embodiment in the mechanism for supporting the bolster 56 and the bogie. Specifically, in place of the right and the left links 52A and 52B, other components to support the bolster 56 and the bogie are provided.

As illustrated in Fig. 18, a right upper center plate 58A and a left upper center plate 58B protrude from the lower surface of the bolster 56. On the upper surface of the first frame 10 (the right side beam or the first cross beam), a lower center plate 59A is provided in a position to correspond to the right upper center plate 58A. Also, on the upper surface of the second frame 20 (the left side beam or the second cross beam), a lower center plate 59B is provided in a position to correspond to the left upper center plate 58B. The right and the left upper center plates 58A and 58B are placed on the lower center plates 59A and 59B and contact the lower center plates 59A and 59B, respectively, in such a manner to allow for axial rotation of the upper center plate 58A and axial rotation of the upper center plate 58B. The bolster 56 is supported by the first frame 10 and the second frame 20 not only via the side bearings 57 but also via the upper center plates 58A and 58B, and the lower center plate 59A and 59B. The other components of the seventh embodiment are the same as those of the sixth embodiment.

According to the seventh embodiment, while the railway vehicle is turning on the rails, a relative yawing displacement between the bolster 56 (body 50) and the bogie is transmitted to the first frame 10 and the second frame 20 through the engagement between the upper center plate 58A of the bolster 56 and the lower center plate 59A of the first frame 10 and the engagement between the upper center plate 58B of the bolster 56 and the lower center plate 59B of the second frame 20. Accordingly, as with the sixth embodiment, a relative displacement in the front-rear direction between the first frame 10 and the second frame 20 is caused.

Therefore, the seventh embodiment brings about the same effects as described in connection with the first embodiment.

The present invention is not limited to the above-described embodiments, and various changes may be made without departing from the scope of the invention. For example, although primary suspensions of a mono-link type are used in the above-described embodiments, primary suspensions of what is called an arm type or of a support-plate type (one-side leaf-spring type) may be used. An primary suspension of the arm type includes an arm which extends forward or backward from an axle box and has a rubber bush inserted therein, at the end. In a case of adopting the arm type, the arm is connected to the bogie frame, and the arm extending from the axle box corresponds to the link of each of the primary suspensions used in the above-described embodiments. An primary suspension of the one-side leaf-spring type includes two leaf springs extending parallel in the front-rear direction from the axle box. In a case of adopting the one-side leaf-spring type, an axle box is connected to a bogie frame via the two leaf springs, and the leaf springs extending from an axle box corresponds to the link of each of the primary suspensions used in the above-described embodiments.

### [Examples]

In order to confirm the effects of the present invention, a numerical simulation analysis was conducted. Specifically, a model of the bogie illustrated in Fig. 1 was fabricated, and running of this model on a straight track and running of this model on a curved track were simulated in a geometric numerical analysis approach. The major dimensions of this model were as follows.
- Distance between the front wheel axle and the rear wheel axle: 2100 [mm]
- Distance between the center of the right axle spring (the center of the right axle box) and the center of the left axle spring (the center of the left axle box): 1600 [mm]
- Distance between the right wheel tread brake device and the left wheel tread brake device: 1145 [mm]
- Distance in the sleeper direction between the center of the bogie and the gear system hanger: 386 [mm]

In the numerical analysis, the radius of curvature of the curved track was set to ∞ (straight track) and varied within a range from R800 to R80 [m] (curvature varied from 0 to 0.0125 [1/m]). The steering amount was calculated as a constant value such that the traveling directions of the front and the rear wheel axles in a curve would be identical with the extending direction of the track in the curve, that is, such that the angle of attack would be zero degrees.

With regard to each of the various radii of curvature, the distance between each of the right front, the right rear, the left front and the left rear wheel tread brake devices and the corresponding wheel, the distance between each of the front and the rear gear systems and the corresponding coupling, and the distance between the first frame and the second frame were extracted. Each of the distances was the distance in the front-rear direction, and was expressed as a relative displacement relative to the initial distance (the distance when the curvature is zero, that is, the distance under the assumption that the model is running on straight rails).

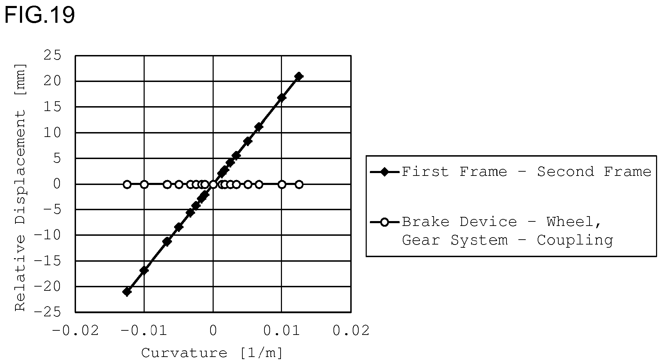

Fig. 19 shows the analysis results. In Fig. 19, the numbers with the negative sign (-) indicate the curvatures of curves to the left, and the numbers with the positive sign (+) indicate the curvatures of curves to the right.

As is apparent from Fig. 19, with any of the curvatures, the relative displacement between each of the wheel tread brake devices and the corresponding wheel, and the relative displacement between each of the gear systems and the corresponding coupling were zero. This result shows that there would be no problem even if general-purpose items are used as the traction motors, the gear systems and the couplings.

When the curvature was the maximum, i.e., 0.125 [1/m] (when the radius of curvature was R80 [m]), the relative displacement between the first frame and the second frame was the maximum, i.e., 21 [mm]. This relative displacement can be absorbed by elastic deformation of the elastic component connecting the first frame and the second frame.

### INDUSTRIAL APPLICABILITY

The present invention is applicable to all kinds of railway vehicles. Especially, the present invention is effectively used for railway vehicles designed to run on railway tracks with curves with small radii of curvature, such as subway, etc.

### DESCRIPTION OF REFERENCE SYMBOLS

10: first frame
11: right side beam
11a: front end portion
11b: rear end portion
12: first cross beam
13: first extending portion
14: first protrusion
15: first projection
16a, 16b: mounting bracket for traction motor
17a, 17b: mounting bracket for hanger
18a, 18b: mounting bracket for brake device
20: second frame
21: left side beam
21a: front end portion
21b: rear end portion
22: second cross beam
23: second extending portion
24: second protrusion
25: second projection
28a, 28b: mounting bracket for brake device
30: elastic component
31A, 31B: wheel axle
32A, 32B, 32C, 32D: wheel
33A, 33B, 33C, 33D: axle box
34A, 34B, 34C, 34D: link extending from the axle box
35: coil spring
36a, 36b: rubber bush of primary suspension
40A, 40B, 40C, 40D: wheel tread brake device
41A, 41B: traction motor
42A, 42B: gear system
43A, 43B: coupling
44A, 44B: hanger
50: body
51: air suspension
52A, 52B: link
53a, 53b: rubber bush
54A, 54B: shaft
55A, 55B: cylindrical member
56: bolster
57: side bearing
58A, 58b: upper center plate
59A, 59B: lower center plate

## Claims

1. A bogie comprising a front wheel axle (31A) and a rear wheel axle (31B) and being capable of performing self-steering of the front wheel axle (31A) and the rear wheel axle (31B), the bogie comprising:
a first frame (10);
a second frame (20);
primary suspensions configured to elastically support axle boxes (33A, 33B, 33C, 33D) fitted on the wheel axles (31A, 31B), in a right side and in a left side of each of the wheel axles (31A, 31B), each of the primary suspensions including a link (34A, 34B, 34C, 34D) extending from the corresponding axle box (33A, 33B, 33C, 33D) in a front-rear direction;
traction motors (41A, 41B) and gear systems (42A, 42B) configured to drive the front wheel axle (31A) and the rear wheel axle (31B) **characterized in that**:
the bogie comprises wheel tread brake devices (40A, 40B, 40C, 40D) provided for wheels (32A, 32B, 32C, 32D) fitted on the wheel axles (31A, 31B), in a right side and in a left side of each of the wheel axles (31A, 31B);
the first frame (10) includes a right side beam (11) and a first cross beam (12) integrated together;
the second frame (20) includes a left side beam (21) and a second cross beam (22) integrated together;
the first frame (10) and the second frame (20) are connected together via an elastic component (30);
the first cross beam (12) includes a first extending portion (13) extending toward a front end portion (21a) of the side beam (21) of the second frame (20);
the second cross beam (22) includes a second extending portion (23) extending toward a front end portion (11a) of the side beam (11) of the first frame (10);
the right front primary suspension permits the right front axle box (33A) to be supported by the front end portion (11a) of the side beam (11) of the first frame (10), the link (34A) extending from the right front axle box (33A) being connected to the second extending portion (23) of the second frame (20);
the left front primary suspension permits the left front axle box (33B) to be supported by the front end portion (21a) of the side beam (21) of the second frame (20), the link (34B) extending from the left front axle box (33B) being connected to the first extending portion (13) of the first frame (10);
the right rear primary suspension permits the right rear axle box (33C) to be supported by a rear end portion (11b) of the side beam (11) of the first frame (10), the link (34C) extending from the right rear axle box (33C) being connected to the side beam (11) of the first frame (10);
the left rear primary suspension permits the left rear axle box (33D) to be supported by a rear end portion (21b) of the side beam (21) of the second frame (20), the link (34D) extending from the left rear axle box (33D) being connected to the side beam (21) of the second frame (20);
the first cross beam (12) supports the left front and the right rear wheel tread brake devices (40B, 40C), the front and the rear traction motors (41A, 41B), and the front and the rear gear systems (42A, 42B); and
the second cross beam (22) supports the right front and the left rear wheel tread brake devices (40A, 40D).

2. The bogie according to claim 1, wherein the elastic component (30) connecting the first frame (10) and the second frame (20) is a rubber.

3. The bogie according to claim 1, wherein the elastic component (30) connecting the first frame (10) and the second frame (20) is a laminated rubber.

4. The bogie according to any one of claims 1 to 3, wherein:
the first cross beam (12) includes a first protrusion (14) protruding to a central portion of the bogie frame;
the second cross beam (22) includes a second protrusion (24) protruding to overlap the first protrusion (14);
the first frame (10) and the second frame (20) are connected via the elastic component (30) at one point that is an overlapping point between the first protrusion (14) of the first frame (10) and the second protrusion (24) of the second frame (20).

5. The bogie according to any one of claims 1 to 3, wherein:
the first cross beam (12) includes a first protrusion (14) protruding to overlap an upper surface of the side beam (21) of the second frame (20);
the second cross beam (22) includes a second protrusion (24) protruding to overlap an upper surface of the side beam (11) of the first frame (10); and
the first frame (10) and the second frame (20) are connected via the elastic component (30) at two points that are an overlapping point between the first protrusion (14) of the first frame (10) and the side beam (21) of the second frame (20) and an overlapping point between the second protrusion (24) of the second frame (20) and the side beam (11) of the first frame (10).

6. The bogie according to claim 5, wherein the first protrusion (14) and the second protrusion (24), which are located in a left side and in a right side respectively, are positioned in different places in the front-rear direction.

7. The bogie according to claim 5, wherein the first protrusion (14) and the second protrusion (24), which are located in a left side and in a right side respectively, are positioned in a same place in the front-rear direction.

8. The bogie according to claim 7, wherein the first protrusion (14) is positioned near the first extending portion (13), and the second protrusion (24) is positioned near the second extending portion (23).

9. The bogie according to one of claims 1 to 3, wherein:
the first cross beam (12) includes a first protrusion (14) protruding to overlap an upper surface of the second cross beam (22);
the second cross beam (22) includes a second protrusion (24) protruding to overlap an upper surface of the first cross beam (12); and
the first frame (10) and the second frame (20) are connected via the elastic component (30) at two points that are an overlapping point between the first protrusion (14) of the first frame (10) and the second cross beam (22) of the second frame (20) and an overlapping point between the second protrusion (24) of the second frame (20) and the first cross beam (12) of the first frame (10).

10. A railway vehicle comprising the bogie according to any one of claims 1 to 9, and a body (50), wherein:
the bogie is a bolster-less type, and includes a right air suspension and a left air suspension (51, 51) provided on the side frame of the first frame (10) and on the side frame of the second frame (20), respectively; and
the body (50) is connected to the air suspensions (51, 51), and is connected to the first frame (10) and the second frame (20) via a right link (52A) and a left link (52B), respectively, each of the right link (52A) and the left link (52B) extending in the front-rear direction and having rubber bushes (53a, 53b) at a front end and at a rear end, respectively.

11. A railway vehicle comprising the bogie according to any one of claims 1 to 9, and a body (50), wherein:
the bogie is a bolster-less type, and includes a right air suspension and a left air suspension (51, 51) provided on the side frame of the first frame (10) and on the side frame of the second frame (20), respectively;
the body (50) is connected to the air suspensions (51, 51); and
a right shaft (54A) and a left shaft (54B) extending from a lower surface of the body (50) are inserted in and engage with cylindrical members (55A, 55B) provided on an upper surface of the first frame (10) and on an upper surface of the second frame (20), respectively.

12. A railway vehicle comprising the bogie according to any one of claims 1 to 9, and a body (50), wherein:
the bogie is a bolster type, and includes side bearings (57) provided on the side frame of the first frame (10) and on the side frame (20) of the second frame (20), respectively, a bolster (56) slidably supported by the side bearings (57), and a right air suspension and a left air suspension (51, 51) provided on the bolster; and
the body (50) is connected to the air suspensions, and the bolster (56) is connected to the first frame (10) and the second frame (20) via a right link (52A) and a left link (52B), respectively, each of the right link (52A) and the left link (52B) extending in the front-rear direction and having rubber bushes (52a, 52b) at a front end and at a rear end, respectively.

13. A railway vehicle comprising the bogie according to any one of claims 1 to 9, and a body (50), wherein:
the bogie is a bolster type, and includes side bearings (57) provided on the side frame of the first frame (10) and on the side frame of the second frame (20), respectively, a bolster (56) slidably supported by the side bearings (57), and a right air suspension and a left air suspension (51, 51) provided on the bolster;
the body (50) is connected to the air suspensions (51, 51); and
the bolster (56) is supported by the first frame (10) and the second frame (20) via a right lower center plate (59A) and a left lower center plate (59B) provided on an upper surface of the first frame (10) and on an upper surface of the second frame (20), and a right upper center plate (58A) and a left upper center plate (58B) protruding from a lower surface of the bolster (56) to contact the right and the left lower center plates (59A, 59B), respectively.

## Patentansprüche

1. Ein Fahrgestell mit einer Vorderradachse (31A) und einer Hinterradachse (31B), das in der Lage ist, eine Selbstlenkung der Vorderradachse (31A) und der Hinterradachse (31B) durchzuführen, wobei das Fahrgestell Folgendes umfasst:
einen ersten Rahmen (10);
einen zweiten Rahmen (20);
Primäraufhängungen, die so konfiguriert sind, dass sie die an den Radachsen (31A, 31B) angebrachten Achslager (33A, 33B, 33C, 33D) auf einer rechten und einer linken Seite jeder der Radachsen (31A, 31B) elastisch abstützen, wobei jede der Primäraufhängungen ein Verbindungsglied (34A, 34B, 34C, 34D) umfasst, das sich von dem entsprechenden Achslager (33A, 33B, 33C, 33D) in einer Richtung von vorne nach hinten erstreckt;
Traktionsmotoren (41A, 41B) und Getriebesysteme (42A, 42B), die zum Antrieb der Vorderradachse (31A) und der Hinterradachse (31B) konfiguriert sind, **dadurch gekennzeichnet, dass**:
das Fahrgestell Radlaufflächenbremsvorrichtungen (40A, 40B, 40C, 40D), die für Räder (32A, 32B, 32C, 32D) vorgesehen sind, die an den Radachsen (31A, 31B) auf einer rechten und einer linken Seite jeder der Radachsen (31A, 31B) angebracht sind, umfasst;
der erste Rahmen (10) einen rechten Seitenträger (11) und einen ersten Querträger (12) aufweist, die miteinander integriert sind;
der zweite Rahmen (20) einen linken Seitenträger (21) und einen zweiten Querträger (22) aufweist, die miteinander integriert sind;
der erste Rahmen (10) und der zweite Rahmen (20) über ein elastisches Bauteil (30) miteinander verbunden sind;
der erste Querträger (12) einen ersten Verlängerungsabschnitt (13) aufweist, der sich zu einem vorderen Endabschnitt (21a) des Seitenträgers (21) des zweiten Rahmens (20) erstreckt;
der zweite Querträger (22) einen zweiten Verlängerungsabschnitt (23) aufweist, der sich zu einem vorderen Endabschnitt (11a) des Seitenträgers (11) des ersten Rahmens (10) erstreckt;
die rechte vordere Primäraufhängung es ermöglicht, dass das rechte Vorderachslager (33A) von dem vorderen Endabschnitt (11a) des Seitenträgers (11) des ersten Rahmens (10) getragen wird, wobei das Verbindungsglied (34A), das sich von dem rechten Vorderachslager (33A) erstreckt, mit dem zweiten sich erstreckenden Abschnitt (23) des zweiten Rahmens (20) verbunden ist;
die linke vordere Primäraufhängung es ermöglicht, dass das linke Vorderachslager (33B) durch den vorderen Endabschnitt (21a) des Seitenträgers (21) des zweiten Rahmens (20) gestützt wird, wobei das Verbindungsglied (34B), das sich von dem linken Vorderachslager (33B) erstreckt, mit dem ersten sich erstreckenden Abschnitt (13) des ersten Rahmens (10) verbunden ist;
die rechte hintere primäre Aufhängung es ermöglicht, dass das rechte hintere Achslager (33C) von einem hinteren Endabschnitt (11b) des Seitenträgers (11) des ersten Rahmens (10) getragen wird, wobei das Verbindungsglied (34C), das sich von dem rechten hinteren Achslager (33C) erstreckt, mit dem Seitenträger (11) des ersten Rahmens (10) verbunden ist;
die linke hintere primäre Aufhängung es ermöglicht, dass das linke hintere Achslager (33D) von einem hinteren Endabschnitt (21b) des Seitenträgers (21) des zweiten Rahmens (20) getragen wird, wobei das sich vom linken hinteren Achslager (33D) erstreckende Verbindungsglied (34D) mit dem Seitenträger (21) des zweiten Rahmens (20) verbunden ist;
der erste Querträger (12) die linke vordere und die rechte hintere Radlaufflächenbremsvorrichtung (40B, 40C), den vorderen und den hinteren Traktionsmotor (41A, 41B) und das vordere und das hintere Getriebesystem (42A, 42B) trägt; und
der zweite Querträger (22) die rechte vordere und die linke hintere Radlaufflächenbremsvorrichtung (40A, 40D) trägt.

2. Fahrgestell nach Anspruch 1, wobei das elastische Bauteil (30), das den ersten Rahmen (10) und den zweiten Rahmen (20) verbindet, ein Gummi ist.

3. Fahrgestell nach Anspruch 1, wobei das elastische Bauteil (30), das den ersten Rahmen (10) und den zweiten Rahmen (20) verbindet, ein laminierter Gummi ist.

4. Fahrgestell nach einem der Ansprüche 1 bis 3, wobei:
der erste Querträger (12) einen ersten Vorsprung (14) aufweist, der in einen mittleren Bereich des Fahrgestellrahmens ragt;
der zweite Querträger (22) einen zweiten Vorsprung (24) aufweist, der so vorsteht, dass er den ersten Vorsprung (14) überlappt;
der erste Rahmen (10) und der zweite Rahmen (20) über die elastische Komponente (30) an einem Punkt verbunden sind, der ein Überlappungspunkt zwischen dem ersten Vorsprung (14) des ersten Rahmens (10) und dem zweiten Vorsprung (24) des zweiten Rahmens (20) ist.

5. Fahrgestell nach einem der Ansprüche 1 bis 3, wobei:
der erste Querträger (12) einen ersten Vorsprung (14) aufweist, der vorsteht, um eine obere Fläche des Seitenträgers (21) des zweiten Rahmens (20) zu überlappen;
der zweite Querträger (22) einen zweiten Vorsprung (24) aufweist, der vorsteht, um eine obere Fläche des Seitenträgers (11) des ersten Rahmens (10) zu überlappen; und
der erste Rahmen (10) und der zweite Rahmen (20) über die elastische Komponente (30) an zwei Punkten verbunden sind, die ein Überlappungspunkt zwischen dem ersten Vorsprung (14) des ersten Rahmens (10) und dem Seitenträger (21) des zweiten Rahmens (20) und ein Überlappungspunkt zwischen dem zweiten Vorsprung (24) des zweiten Rahmens (20) und dem Seitenträger (11) des ersten Rahmens (10) darstellen.

6. Fahrgestell nach Anspruch 5, wobei der erste Vorsprung (14) und der zweite Vorsprung (24), die sich auf der linken bzw. rechten Seite befinden, an unterschiedlichen Stellen in der Richtung von vorne nach hinten angeordnet sind.

7. Fahrgestell nach Anspruch 5, wobei der erste Vorsprung (14) und der zweite Vorsprung (24), die sich auf der linken bzw. rechten Seite befinden, an derselben Stelle in der Richtung von vorn nach hinten angeordnet sind.

8. Fahrgestell nach Anspruch 7, wobei der erste Vorsprung (14) in der Nähe des ersten Verlängerungsabschnitts (13) und der zweite Vorsprung (24) in der Nähe des zweiten Verlängerungsabschnitts (23) angeordnet ist.

9. Fahrgestell nach einem der Ansprüche 1 bis 3, wobei:
der erste Querträger (12) einen ersten Vorsprung (14) aufweist, der so vorsteht, dass er eine obere Fläche des zweiten Querträgers (22) überlappt;
der zweite Querträger (22) einen zweiten Vorsprung (24) aufweist, der so vorsteht, dass er eine obere Fläche des ersten Querträgers (12) überlappt; und
der erste Rahmen (10) und der zweite Rahmen (20) über die elastische Komponente (30) an zwei Punkten verbunden sind, die ein Überlappungspunkt zwischen dem ersten Vorsprung (14) des ersten Rahmens (10) und dem zweiten Querträger (22) des zweiten Rahmens (20) und ein Überlappungspunkt zwischen dem zweiten Vorsprung (24) des zweiten Rahmens (20) und dem ersten Querträger (12) des ersten Rahmens (10) darstellen.

10. Schienenfahrzeug mit dem Fahrgestell nach einem der Ansprüche 1 bis 9 und einem Aufbau (50), wobei:
das Fahrgestell ein Fahrgestell ohne Hauptquerträger ist, und eine rechte Luftfederung und eine linke Luftfederung (51, 51) aufweist, die an dem Seitenrahmen des ersten Rahmens (10) bzw. an dem Seitenrahmen des zweiten Rahmens (20) vorgesehen sind; und
der Aufbau (50) mit den Luftfederungen (51, 51) verbunden ist und mit dem ersten Rahmen (10) und dem zweiten Rahmen (20) über einen rechtes Verbindungsglied (52A) bzw. ein linkes Verbindungsglied (52B) verbunden ist, wobei sich sowohl das rechte Verbindungsglied (52A) als auch das linke Verbindungsglied (52B) in der Richtung von vorn nach hinten erstrecken und Gummibuchsen (53a, 53b) an einem vorderen Ende bzw. an einem hinteren Ende aufweisen.

11. Schienenfahrzeug mit dem Fahrgestell nach einem der Ansprüche 1 bis 9 und einem Aufbau (50), wobei:
das Fahrgestell ein Fahrgestell ohne Hauptquerträger ist, und eine rechte Luftfederung und eine linke Luftfederung (51, 51) aufweist, die am Seitenrahmen des ersten Rahmens (10) bzw. am Seitenrahmen des zweiten Rahmens (20) vorgesehen sind;
der Aufbau (50) mit den Luftfederungen (51, 51) verbunden ist; und eine rechte Welle (54A) und eine linke Welle (54B), die sich von einer unteren Fläche des Aufbaus (50) erstrecken, in zylindrische Elemente (55A, 55B), die an einer oberen Fläche des ersten Rahmens (10) bzw. an einer oberen Fläche des zweiten Rahmens (20) vorgesehen sind, eingesetzt sind und mit diesen in Eingriff stehen.

12. Schienenfahrzeug mit dem Fahrgestell nach einem der Ansprüche 1 bis 9 und einem Aufbau (50), wobei:
das Fahrgestell ein Fahrgestell mit Hauptquerträger ist, und Seitenlager (57), die an dem Seitenrahmen des ersten Rahmens (10) bzw. an dem Seitenrahmen (20) des zweiten Rahmens (20) vorgesehen sind, ein Hauptquerträger (56), der von den Seitenlagern (57) gleitend gelagert wird, und eine rechte Luftfederung und eine linke Luftfederung (51, 51), die an dem Hauptquerträger vorgesehen sind, aufweist; und
der Aufbau (50) mit den Luftfederungen verbunden ist, und der Hauptquerträger (56) mit dem ersten Rahmen (10) und dem zweiten Rahmen (20) über ein rechtes Verbindungsglied (52A) bzw. ein linkes Verbindungsglied (52B) verbunden ist, wobei sich sowohl das rechte Verbindungsglied (52A) als auch das linke Verbindungsglied (52B) in der Richtung von vorn nach hinten erstrecken und Gummibuchsen (52a, 52b) an einem vorderen Ende bzw. an einem hinteren Ende aufweisen.

13. Schienenfahrzeug mit dem Fahrgestell nach einem der Ansprüche 1 bis 9 und einem Aufbau (50), wobei:
das Fahrgestell ein Fahrgestell mit Hauptquerträger ist, und Seitenlager (57), die an dem Seitenrahmen des ersten Rahmens (10) bzw. an dem Seitenrahmen des zweiten Rahmens (20) vorgesehen sind, ein Hauptquerträger (56), das durch die Seitenlager (57) verschiebbar gelagert ist, und eine rechte Luftfederung und eine linke Luftfederung (51, 51), die an dem Hauptquerträger vorgesehen sind, aufweist;
der Aufbau (50) mit den Luftfederungen (51, 51) verbunden ist; und der Hauptquerträger (56) von dem ersten Rahmen (10) und dem zweiten Rahmen (20) über eine rechte untere Mittelplatte (59A) und eine linke untere Mittelplatte (59B), die auf einer oberen Fläche des ersten Rahmens (10) und auf einer oberen Fläche des zweiten Rahmens (20) vorgesehen sind, und eine rechte obere Mittelplatte (58A) und eine linke obere Mittelplatte (58B), die von einer unteren Fläche des Hauptquerträgers (56) vorstehen, um die rechte bzw. die linke untere Mittelplatte (59A, 59B) zu berühren, getragen wird.

## Revendications

1. Bogie comprenant un essieu de roue avant (31A) et un essieu de roue arrière (31B) et étant capable de réaliser une auto-direction de l'essieu de roue avant (31A) et l'essieu de roue arrière (31B), le bogie comprenant :
un premier châssis (10) ;
un second châssis (20) ;
des suspensions primaires configurées pour supporter de manière élastique des boîtes d'essieux (33A, 33B, 33C, 33D) montées sur les essieux de roues (31A, 31B), dans un côté droit et dans un côté gauche de chacun des essieux de roues (31A, 31B), chacune des suspensions primaires incluant une liaison (34A, 34B, 34C, 34D) s'étendant à partir de la boîte d'essieu correspondante (33A, 33B, 33C, 33D) dans une direction avant-arrière ;
des moteurs de traction (41A, 41B) et des systèmes d'embrayage (42A, 42B) configurés pour commander l'essieu de roue avant (31A) et l'essieu de roue arrière (31B), **caractérisé en ce que** :
le bogie comprend des dispositifs de freinage sur table de roulement (40A, 40B, 40C, 40D) fournis pour des roues (32A, 32B, 32C, 32D) montées sur les essieux de roues (31A, 31B), dans un côté droit et dans un côté gauche de chacun des essieux de roues (31A, 31B) ;
le premier châssis (10) inclut une poutre côté droit (11) et une première poutre transversale (12) intégrées ensemble ;
le second châssis (20) inclut une poutre côté gauche (21) et une seconde poutre transversale (22) intégrées ensemble ;
le premier châssis (10) et le second châssis (20) sont connectés ensemble via un constituant élastique (30) ;
la première poutre transversale (12) inclut une première portion d'extension (13) s'étendant vers une portion d'extrémité avant (21a) de la poutre latérale (21) du second châssis (20) ;
la seconde poutre transversale (22) inclut une seconde portion d'extension (23) s'étendant vers une portion d'extrémité avant (11a) de la poutre latérale (11) du premier châssis (10) ;
la suspension primaire avant droite permet à la boîte d'essieu avant droit (33A) d'être supportée par la portion d'extrémité avant (11a) de la poutre latérale (11) du premier châssis (10), la liaison (34A) s'étendant à partir de la boîte d'essieu avant droit (33A) étant connectée à la seconde portion d'extension (23) du second châssis (20) ;
la suspension primaire avant gauche permet à la boîte d'essieu avant gauche (33B) d'être supportée par la portion d'extrémité avant (21a) de la poutre latérale (21) du second châssis (20), la liaison (34B) s'étendant à partir de la boîte d'essieu avant gauche (33B) étant connectée à la première portion d'extension (13) du premier châssis (10) ;
la suspension primaire arrière droite permet à la boîte d'essieu arrière droite (33C) d'être supportée par une portion d'extrémité arrière (11b) de la poutre latérale (11) du premier châssis (10), la liaison (34C) s'étendant à partir de la boîte d'essieu arrière droite (33C) étant connectée à la poutre latérale (11) du premier châssis (10) ;
la suspension primaire arrière gauche permet à la boîte d'essieu arrière gauche (33D) d'être supportée par une portion d'extrémité arrière (21b) de la poutre latérale (21) du second châssis (20), la liaison (34D) s'étendant à partir de la boîte d'essieu arrière gauche (33D) étant connectée à la poutre latérale (21) du second châssis (20) ;
la première poutre transversale (12) supporte les dispositifs de freinage sur table de roulement avant gauche et arrière droit (40B, 40C), les moteurs de traction avant et arrière (41A, 41B), et les systèmes d'embrayage avant et arrière (42A, 42B) ; et
la seconde poutre transversale (22) supporte les dispositifs de freinage sur table de roulement avant droit et arrière gauche (40A, 40D).

2. Bogie selon la revendication 1, dans lequel le constituant élastique (30) connectant le premier châssis (10) et le second châssis (20) est un caoutchouc.

3. Bogie selon la revendication 1, dans lequel le constituant élastique (30) connectant le premier châssis (10) et le second châssis (20) est un caoutchouc stratifié.

4. Bogie selon l'une quelconque des revendications 1 à 3, dans lequel :
la première poutre transversale (12) inclut une première saillie (14) faisant saillie par rapport à une portion centrale du châssis de bogie ;
la seconde poutre transversale (22) inclut une seconde saillie (24) faisant saillie pour chevaucher la première saillie (14) ;
le premier châssis (10) et le second châssis (20) sont connectés via le constituant élastique (30) en un point qui est un point de chevauchement entre la première saille (14) du premier châssis (10) et la seconde saillie (24) du second châssis (20).

5. Bogie selon l'une quelconque des revendications 1 à 3, dans lequel :
la première poutre transversale (12) inclut une première saillie (14) faisant saillie pour chevaucher une surface supérieure de la poutre latérale (21) du second châssis (20) ;
la seconde poutre transversale (22) inclut une seconde saillie (24) faisant saillie pour chevaucher une surface supérieure de la poutre latérale (11) du premier châssis (10) ; et
le premier châssis (10) et le second châssis (20) sont connectés via le constituant élastique (30) aux deux points qui sont un point de chevauchement entre la première saille (14) du premier châssis (10) et la poutre latérale (21) du second châssis (20) et un point de chevauchement entre la seconde saillie (24) du second châssis (20) et la poutre latérale (11) du premier châssis (10).

6. Bogie selon la revendication 5, dans lequel la première saillie (14) et la seconde saillie (24), qui sont disposées dans un côté gauche et dans un côté droit respectivement, sont positionnées à des endroits différents dans la direction avant-arrière.

7. Bogie selon la revendication 5, dans lequel la première saillie (14) et la seconde saillie (24), qui sont disposées dans un côté gauche et dans un côté droit respectivement, sont positionnées au même endroit dans la direction avant-arrière.

8. Bogie selon la revendication 7, dans lequel la première saillie (14) est positionnée à proximité de la première portion d'extension (13), et la seconde saillie (24) est positionnée à proximité de la seconde portion d'extension (23).

9. Bogie selon l'une quelconque des revendications 1 à 3, dans lequel :
la première poutre transversale (12) inclut une première saillie (14) faisant saillie pour chevaucher une surface supérieure de la seconde poutre transversale (22) ;
la seconde poutre transversale (22) inclut une seconde saillie (24) faisant saillie pour chevaucher une surface supérieure de la première poutre transversale (12) ; et
le premier châssis (10) et le second châssis (20) sont connectés via le constituant élastique (30) en deux points qui sont un point de chevauchement entre la première saille (14) du premier châssis (10) et la seconde poutre transversale (22) du second châssis (20) et un point de chevauchement entre la seconde saillie (24) du second châssis (20) et la première poutre transversale (12) du premier châssis (10).

10. Véhicule ferroviaire comprenant le bogie selon l'une quelconque des revendications 1 à 9, et un corps (50), dans lequel :
le bogie est d'un type sans traverse danseuse, et inclut une suspension à air droite et une suspension à air gauche (51, 51) fournies sur le châssis latéral du premier châssis (10) et sur le châssis latéral du second châssis (20), respectivement ; et
le corps (50) est connecté aux suspensions à air (51, 51) et est connecté au premier châssis (10) et au second châssis (20) via une liaison droite (52A) et une liaison gauche (52B), respectivement, chacune de la liaison droite (52A) et la liaison gauche (52B) s'étendant dans la direction avant-arrière et ayant des coussinets en caoutchouc (53a, 53b) à une extrémité avant et à une extrémité arrière, respectivement.

11. Véhicule ferroviaire comprenant le bogie selon l'une quelconque des revendications 1 à 9, et un corps (50), dans lequel :
le bogie est d'un type à traverse danseuse, et inclut une suspension à air droite et une suspension à air gauche (51, 51) fournies sur le châssis latéral du premier châssis (10) et sur le châssis latéral du second châssis (20), respectivement ;
le corps (50) est connecté aux suspensions à air (51, 51) ; et
un arbre droit (54A) et un arbre gauche (54B) s'étendant à partir d'une surface inférieure du corps (50) sont insérés dans et s'engagent avec des éléments cylindriques (55A, 55B) fournis sur une surface supérieure du premier châssis (10) et sur une surface supérieure du second châssis (20), respectivement.

12. Véhicule ferroviaire comprenant le bogie selon l'une quelconque des revendications 1 à 9, et un corps (50), dans lequel :
le bogie est d'un type à traverse danseuse, et inclut des paliers latéraux (57) fournis sur le châssis latéral du premier châssis (10) et sur le châssis latéral (20) du second châssis (20), respectivement, une traverse danseuse (56) supportée de manière coulissante par les paliers latéraux (57), et une suspension à air droite et une suspension à air gauche (51, 51) fournies sur la traverse danseuse ; et
le corps (50) est connecté aux suspensions à air, et la traverse danseuse (56) est connectée au premier châssis (10) et au second châssis (20) via une liaison droite (52A) et une liaison gauche (52B), respectivement, chacune de la liaison droite (52A) et la liaison gauche (52B) s'étendant dans la direction avant-arrière et présentant des coussinets en caoutchouc (52a, 52b) à une extrémité avant et à une extrémité arrière, respectivement.

13. Véhicule ferroviaire comprenant le bogie selon l'une quelconque des revendications 1 à 9, et un corps (50), dans lequel :
le bogie est d'un type à traverse danseuse, et inclut des paliers latéraux (57) fournis sur le châssis latéral du premier châssis (10) et sur le châssis latéral du second châssis (20), respectivement, une traverse danseuse (56) supportée de manière coulissante par les paliers latéraux (57), et une suspension à air droite et une suspension à air gauche (51, 51) fournies sur la traverse danseuse ;
le corps (50) est connecté aux suspensions à air (51, 51) ; et
la traverse danseuse (56) est supportée par le premier châssis (10) et le second châssis (20) via une plaque centrale inférieure droite (59A) et une plaque centrale inférieure gauche (59B) fournies sur une surface supérieure du premier châssis (10) et sur une surface supérieure du second châssis (20), et une plaque centrale supérieure droite (58A) et une plaque centrale supérieure gauche (58B) faisant saillie à partir d'une surface inférieure de la traverse danseuse (56) pour être en contact avec les plaques centrales inférieures gauche et droite (59A, 59B), respectivement.
